(19) Europäisches Patentamt
European Patent Office
Office européen des brevets

(11) **EP 4 339 969 A2**

(12) # EUROPEAN PATENT APPLICATION
published in accordance with Art. 153(4) EPC

(43) Date of publication:
**20.03.2024 Bulletin 2024/12**

(21) Application number: **22807059.5**

(22) Date of filing: **18.02.2022**

(51) International Patent Classification (IPC):
*H01B 1/06* [(2006.01)]     *H01B 13/00* [(2006.01)]
*H01M 10/05* [(2010.01)]     *H01M 10/0562* [(2010.01)]

(52) Cooperative Patent Classification (CPC):
**H01B 1/06; H01B 13/00; H01M 10/05;
H01M 10/0562;** Y02E 60/10

(86) International application number:
**PCT/JP2022/006556**

(87) International publication number:
**WO 2022/239352 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.05.2021   JP 2021080074**

(71) Applicant: **Panasonic Intellectual Property
Management Co., Ltd.
Kadoma-shi, Osaka 571-0057 (JP)**

(72) Inventor: **KOGA Eiichi
Tokyo 103-0022 (JP)**

(74) Representative: **Grünecker Patent- und
Rechtsanwälte
PartG mbB
Leopoldstraße 4
80802 München (DE)**

(54) **SOLID ELECTROLYTE, PRODUCTION METHOD FOR SOLID ELECTROLYTE, AND BATTERY**

(57)    A solid electrolyte of the present disclosure contains Li, M, and X, and, in the solid electrolyte, the coefficient of variation of the M content is 10 or less, and the coefficient of variation of the X content is 15 or less. A method for producing a solid electrolyte according to the present disclosure includes (A) synthesizing a halide containing Li, M, and X, (B) pulverizing the halide, and (C) heat-treating the halide, and the (A), the (B), and the (C) are performed in this order. Here, M is at least one selected from the group consisting of metalloids and metal elements other than Li, and X is at least one selected from the group consisting of F, Cl, Br, and I.

**Description**

Technical Field

The present disclosure relates to a solid electrolyte, a method for producing a solid electrolyte, and a battery.

Background Art

PTL 1 discloses a method for producing a halide, the method including a heat treatment step.

Citation List

Patent Literature

PTL 1: International Publication No. 2020/136951

Summary of Invention

Technical Problem

An object of the present disclosure is to provide a solid electrolyte suitable for improving ion conductivity.

Solution to Problem

The present disclosure involves:

a solid electrolyte containing Li, M, and X,
in which M is at least one selected from the group consisting of metalloids and metal elements other than Li,
X is at least one selected from the group consisting of F, Cl, Br, and I, and
in the solid electrolyte,

a coefficient of variation of a content of the M is less than or equal to 10, and
a coefficient of variation of a content of the X is less than or equal to 15,

where the coefficients of variation of the contents of the M and the X in the solid electrolyte are determined by a following method:

for the solid electrolyte, an average value $A_M$ and a standard deviation $\sigma_M$ of the content of the M and an average value Ax and a standard deviation $\sigma_X$ of the content of the X are determined, and
by using the average value $A_M$ and the standard deviation $\sigma_M$ of the content of the M, the coefficient of variation of the content of the M is determined, and by using the average value Ax and the standard deviation $\sigma_X$ of the content of the X, the coefficient of variation of the content of the X is determined.

Advantageous Effects of Invention

The present disclosure provides a solid electrolyte suitable for improving ion conductivity.

Brief Description of Drawings

[Fig. 1] Fig. 1 is a flowchart indicating a method for producing a solid electrolyte according to a second embodiment.
[Fig. 2] Fig. 2 is a flowchart indicating a method for producing a solid electrolyte according to a third embodiment.
[Fig. 3] Fig. 3 is a flowchart indicating a method for producing a solid electrolyte according to a fourth embodiment.

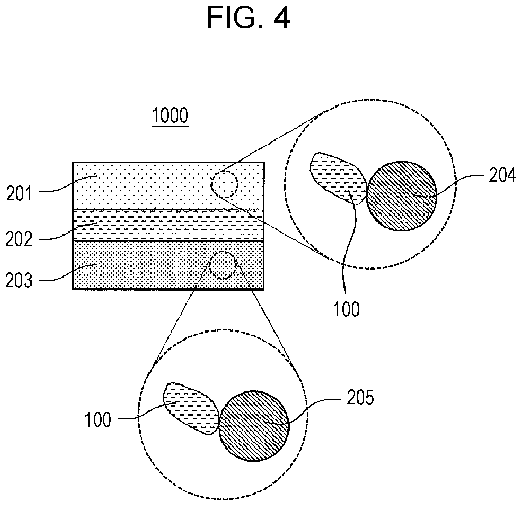

[Fig. 4] Fig. 4 is a cross-sectional view of a battery 1000 according to a fifth embodiment.

Description of Embodiments

Hereinafter, the embodiments of the present disclosure are described with reference to the drawings. Embodiments described below do not limit the present disclosure. The embodiments described below are merely general or specific examples. The numerical values, shapes, materials, constituent elements, positions in which the constituent elements are arranged, etc., described in the embodiments below are merely examples and do not intend to limit the present disclosure.

(First embodiment)

A solid electrolyte according to a first embodiment contains Li, M, and X. M is at least one selected from the group consisting of metalloids and metal elements other than Li. X is at least one selected from the group consisting of F, Cl, Br, and I. In the solid electrolyte of the first embodiment, the coefficient of variation of the M content is 10 or less, and the coefficient of variation of the X content is 15 or less.

The coefficients of variation of the M and X contents in the solid electrolyte of the first embodiment is determined by the following method:
For the solid electrolyte, an average value $A_M$ and a standard deviation $\sigma_M$ of the M content and an average value $A_X$ and a standard deviation $\sigma_X$ of the X content are determined.

By using the average value $A_M$ and the standard deviation $\sigma_M$, the coefficient of variation of the M content is determined, and, by using the average value $A_X$ and the standard deviation $\sigma_X$, the coefficient of variation of the X content is determined.

The coefficient of variation of the M content is given by $\sigma_M/A_M$, and the coefficient of variation of the X content is given by $\sigma_X/A_X$.

Here, the coefficient of variation of the M content refers to the coefficient of variation of the total of elements contained as M in the solid electrolyte of the first embodiment. In other words, the M content in the solid electrolyte, the average value $A_M$ of the M content, and the standard deviation $\sigma_M$ of the M content are, respectively, the total content of elements contained as M in the solid electrolyte, and the average value and standard deviation of the content.

The coefficient of variation of the X (halogen such as F, Cl, Br, or I) content refers to the coefficient of variation of the total content of halogens contained in the solid electrolyte of the first embodiment. In other words, the X content in the solid electrolyte, the average value $A_X$ of the X content, and the standard deviation $\sigma_X$ of the X content are, respectively, the total content of halogens contained in the solid electrolyte, and the average value and standard deviation of the content.

The M and X atom contents in the solid electrolyte of the first embodiment may be determined by, for example, setting arbitrarily selected 20 spots having a spot size of 1 $\mu$m, and measuring each spot with an electron probe micro analyzer (EPMA).

A solid electrolyte according to the first embodiment is a solid electrolyte containing a halogen X. Hereinafter, in this description, the halogen-containing solid electrolyte may be referred to as a halide solid electrolyte. The solid electrolyte of the first embodiment is a halide solid electrolyte in which the coefficients of variation of the M and X contents are decreased to be in the ranges described above. In other words, the solid electrolyte according to the first embodiment is a homogeneous halide solid electrolyte in which the compositional variation is suppressed. Thus, the solid electrolyte of the first embodiment can have improved ion conductivity.

The coefficient of variation of the M content may be, for example 5 or less or 4 or less. Since the coefficient of variation of the M content is suppressed within the small range described above, the solid electrolyte of the first embodiment can have further improved ion conductivity.

In the solid electrolyte of the first embodiment, the average value of the O atom content relative to the total of all atoms other than Li atoms may be less than or equal to 2.5 atom%, less than or equal to 2.0 atom%, less than or equal to 1.5 atom%, or less than or equal to 1.0 atom%.

In the solid electrolyte of the first embodiment, the coefficient of variation of the M content may be smaller than the coefficient of variation of the X content. The elements contained as M have prominently affect the characteristics and properties of the solid electrolyte. Thus, by suppressing the variation in the M content, a solid electrolyte more suitable for improving the ion conductivity is obtained.

The average value of the O atom content relative to the total of all atoms other than Li atoms is, for example, determined by the following method:
For a solid electrolyte, 20 arbitrarily selected spots having a spot size of 1 $\mu$m are set, and the O atom content relative to the total of all atoms other than Li atoms is determined by EPMA at each of the spots.

Then the results of the O atom content at the 20 spots are used to determine the average value of the O atom content.

Since the average value of the O atom content is suppressed to a low level within the range described above, the solid electrolyte of the first embodiment can have further improved ion conductivity.

In the solid electrolyte of the first embodiment, the M atom content determined by EPMA may satisfy formula (1) below. Here, in formula (1) below, $A_M$ and $\sigma_M$ respectively represent the average value and the standard deviation of the M content described above.

$$(1): A_M - 3\sigma_M \leq M \text{ atom content} \leq A_M + 3\sigma_M$$

Since the solid electrolyte of the first embodiment satisfies formula (1) described above, discoloration can be suppressed.

In the solid electrolyte of the first embodiment, the X atom content determined by EPMA may satisfy formula (2) below. Here, in formula (2), $A_X$ and $\sigma_X$ respectively represent the average value and the standard deviation of the X content described above.

$$(2): A_X - 3\sigma_X \leq X \text{ atom content} \leq A_X + 3\sigma_X$$

Since the solid electrolyte of the first embodiment satisfies formula (2) described above, discoloration can be suppressed.

(Second embodiment)

As described in the Background Art section, PTL 1 discloses a method for producing a halide, the method including a heat treatment step. For example, in order to synthesize $Li_3YCl_6$, a mixed material prepared by synthesizing raw materials, LiCl and $YCl_3$ is heat-treated in an inert atmosphere. According to this production method, the composition in the material becomes uneven, and there may be portions where high ion conductivity is not obtained. Furthermore, if such a halide is used in a battery and large current such as for rapid charging and discharging is fed, the current concentrates on the portions where the ion conductivity is high, and this is likely to induce material degradation and make long-term use a challenge.

Regarding the halide solid electrolyte produced by an existing method such as the one described above, the inventors of the present invention have focused on the fact that constituent components of the halide solid electrolyte have variation (in other words, fluctuations) near the desired composition, and the halide solid electrolyte is not a completely homogeneous body. Conceiving that the ion conductivity can be improved and generation of unintended and unnecessary precipitate phases can be suppressed by suppressing such compositional variations to a low level, the inventors have examined a method for suppressing the compositional variation in the solid electrolyte. As a result, the inventors of the present invention have arrived at the production method of the present disclosure such as the production method of the second embodiment described below. The production method of the present disclosure is a production method by which the compositional variation can be suppressed on the microstructure level and by which a homogeneous solid electrolyte with a composition that exhibits high ion conductivity can be produced.

A method for producing a solid electrolyte according to a second embodiment will now be described.

A method for producing a solid electrolyte according to the second embodiment includes:

(A) synthesizing a halide containing Li, M, and X;
(B) pulverizing the halide; and
(C) heat-treating the halide. M is at least one selected from the group consisting of metalloids and metal elements other than Li, and X is at least one selected from the group consisting of F, Cl, Br, and I. (A), (B), and (C) described above are carried out in this order.

According to the production method of the second embodiment, a halide solid electrolyte is obtained.

In the production method of the second embodiment, after a halide is synthesized in (A) above, (B) pulverizing and (C) heat-treating described above is performed on the halide. According to this method, a halide solid electrolyte in which the compositional variation is suppressed, for example, a halide solid electrolyte, such as the halide solid electrolyte of the first embodiment, in which the coefficients of variation of the M and X contents are decreased, is obtained. As such, according to the production method of the second embodiment, a homogeneous halide solid electrolyte in which the compositional variation is suppressed is obtained. Thus, the halide solid electrolyte obtained by the production method of the second embodiment can have improved ion conductivity.

Hereinafter, (A) described above is referred to as the "synthesis step", (B) described above is referred to as the "pulverizing step", and (C) described above is referred to as the "heat-treatment step".

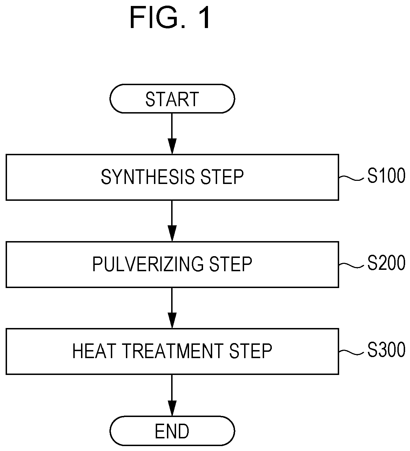

Fig. 1 is a flowchart showing the method for producing a solid electrolyte according to the second embodiment. As illustrated in Fig. 1, the production method of the second embodiment includes a synthesis step S100, a pulverizing step S200, and a heat-treatment step S300.

(Synthesis step S100)

In the synthesis step S100, a halide containing Li, M, and X is synthesized. For example, starting materials for the raw material of the halide are mixed so that the starting materials react with one another.

The method used to synthesize a halide by reacting the starting materials may involve heating (for example, heat treatment). Alternatively, the starting materials may be reacted mechanochemically (in other words, by a mechanochemical milling method). For example, a halide may be synthesized by the impact action of, for example, a pulverizing process using a planetary ball mill or a ball mill that uses a typical pot mill. According to these methods, a homogeneous halide can be synthesized.

An example of the starting material is LiX, an oxide containing M, or an ammonium compound. LiX is, for example, LiCl, LiBr, or LiI. The ammonium compound is, for example, $NH_4X$. $NH_4X$ is, for example, $NH_4Cl$. The oxide containing M is, for example, $Y_2O_3$. A precursor compound of a halide may be used as a starting material.

M may contain Y. M may be Y. As a result, the halide has high ion conductivity.

X may contain at least one selected from the group consisting of Cl and Br. As a result, the halide has high ion conductivity.

In the synthesis step S 100, a halide solely composed of Li, M, and X may be synthesized. Such a halide can exhibit high ion conductivity.

Starting materials may be powders. The average particle diameter of a powder of a starting material may be, for example, greater than or equal to 0.5 $\mu$m and less than or equal to 10 $\mu$m.

The starting materials may be any as long as the starting materials can be evenly mixed and a halide can be synthesized.

The halide obtained in the synthesis step S 100 is, for example, a melt, a sinter, or a solid block of a solidified powder.

When a halide is to be synthesized by heat treatment, for example, a mixed material (for example, a mixed powder) obtained by evenly mixing starting materials is placed in an alumina heat-resistant container (in other words, a sagger), and heat-treated in a heat treatment surface in an inert gas atmosphere. An example of the inert atmosphere is argon or nitrogen. For example, while flowing nitrogen into the furnace in the heat treatment process and discharging the reaction gas, heat treatment may be performed at a temperature higher than or equal to 300°C and lower than or equal to 600°C for 1 hour or longer or 20 hours or shorter in an atmosphere furnace. The reaction gas contains, for example, moisture, chlorine, ammonium, hydrogen chloride, etc. As such, by introducing the inert gas into the heat treatment furnace and discharging the inert gas, unnecessary reaction gas components etc., can be prevented from remaining in the furnace, that is, in the halide after the reaction. When introducing the inert gas into the furnace, the inert gas preferably does not directly hit the sagger containing the starting materials. For example, a plate larger than the gas introduction port may be placed between the gas introduction port and the sagger. The plate may have a thickness with which the plate does not break due to the gas flow or handling. For example, a plate such as an alumina plate may be set up to provide partial shielding. As such, by shielding between the gas introduction port and the sagger, the gas circumvents the shielding plate and then contacts the sagger. As a result, the gas-induced unevenness in temperature distribution inside the sagger can be suppressed. Thus, the distribution of the state of the progress of the synthetic reaction of the starting materials is less likely to be uneven.

The gas introduction port is preferably formed on the bottom side of the furnace, and the discharge port is preferably formed on the upper side (for example, on the ceiling side or in an upper portion of a side wall). In this manner, the reaction gas can be smoothly discharged out of he furnace along with the convention flow in the furnace flowing from the bottom to the top. Thus, unnecessary residual components can be decreased.

The introduction gas may be heated and then introduced into the furnace. As a result, the temperature distribution inside the sagger is less likely to be uneven. As a result, the reaction distribution of the starting materials can be made homogeneous, and a more homogeneous halide can be obtained.

The heat treatment temperature may be any temperature at which a halide is generated. When the heat treatment is performed at a temperature higher than or equal to the melting point of the halide, the molten state created thereby and having fluidity promotes diffusion in the composition compared to in a solid, and thus, homogeneous blocks can be obtained.

The heat treatment temperature may be higher than or equal to 350 ° C and lower than or equal to 600 ° C. The heat treatment time may be longer than or equal to 1 hour and shorter than or equal to 20 hours. The temperature and time necessary for the synthesis and the reaction gas discharge time can be determined as appropriate.

A known atmosphere heat treatment furnace can be used as the heat treatment furnace.

In order to remove the atmospheric air and moisture between particles of the powder placed deep in the sagger and to completely replace them with an inert gas, vacuum substitution may be performed before flowing the inert gas. As a result, the influence of the components in the atmospheric air and moisture can be mitigated. The vacuum substitution may be repeated. Prior to the heat treatment, the sagger may be preliminarily heat-treated with an inert gas as in the heat treatment so as to remove the oxygen and moisture adsorbing to the sagger. In this manner, the halide can be stably synthesized.

The temperature distribution inside the sagger may be a temperature distribution width of a typical heat treatment furnace, for example, within 30 ° C. The temperature distribution inside the sagger refers to the difference between the highest temperature and the lowest temperature inside the sagger.

When the raw materials are heat-treated at a temperature higher than or equal to the melting temperature of the halide, the sagger to be used is preferably a dense alumina heat-resistant container having no air permeability, for example. For example, a grade SSA-H (purity: 95%, density: 3.9 g/cm$^3$, moisture absorption: less than or equal to 0.5%), which is typically employed, or a higher grade is preferable. In this manner, the halide can be synthesized without causing the molten components to penetrate into the walls of the sagger. Moreover, the sagger of this grade has heat conductivity as high as about 20 W/m·k. Thus, the temperature distribution inside the sagger is less likely to be uneven. When such a sagger is used, the reaction between the synthesized halide and the sagger rarely occurs, and the halide, which has been synthesized in a state of molten blocks, can be easily separated from the sagger. Thus, the halide blocks can be recovered with less loss.

The material for the sagger is not limited to alumina. For example, a highly heat-conductive refractory material that is comparable or superior to alumina and that does not readily react with the halide may be used. As such, by using a highly heat-conductive refractory material in the sagger, the halide can be synthesized while suppressing the unevenness of the temperature distribution inside the sagger. Examples of the sagger other than those described above are highly heat-conductive refractory materials such as SSA-S, SSA-T, or SSA-995-grade alumina or SiC having a heat conductivity of about 17 W/m·k. From the viewpoints of the temperature distribution and the followability in the heating and cooling processes, the heat capacity of the sagger is preferably small. For example, the sagger preferably has a mass smaller than the mass of the halide to be synthesized.

As described above, in the synthesis step S100, the starting materials may be mechanochemically reacted. For example, the starting materials together with pulverizing media such as zirconia balls are placed in a planetary ball mill or a pot mill and pulverized. The reaction progresses by repetition of the impact action from the pulverizing media, and a halide is synthesized. Since the synthesis takes place in a confined space, the composition does not evaporate, and all raw materials placed therein can be recovered; thus, a product having the composition as charged is easily obtained.

The pulverizing media are most preferably known partially stabilized zirconia having excellent wear resistance. By using the partially stabilized zirconia as the pulverizing media, mixing of impurities caused by wear can be relatively decreased. In order to enhance the pulverizability (for example, the synthesis rate), the inner wall of the ball mill may also be made of the same material as the hard pulverizing media, such as zirconia. The shape of the inner wall of the ball mill may be a cylindrical shape or a polygonal cylindrical shape such as a rectangular shape. When the inner wall of the ball mill has a polygonal cylindrical shape, the pulverizability is enhanced, and the synthesis rate increases.

For example, pulverizing media are placed in a mill container such that the volume ratio thereof is 10% to 60% of the mill container, the mill container is sealed with an inert gas, and mixing is carried out by rotating the mill container.

Spherical pulverizing media having a diameter greater than or equal to 2 mm and less than or equal to 30 mm may be used as the pulverizing media, for example. In order to adjust the pulverizability (for example, the synthesis rate), the size of the pulverizability may be selected.

The synthesis time may be longer than or equal to 1 hour and shorter than or equal to 80 hours. Typically, the synthesis time is 10 to 20 hours. In mass production, the pulverizing conditions may be set in view of the mass productivity.

To shorten the reaction time, the ball mill may be heated from outside to activate the reaction. As a result, the mass productivity can be improved.

If a material system has a high mechanochemical activity, mere shear stress between the mortar and the pestle is enough to carry out the synthesis. In such a case, synthesis may be conducted with an automatic mortar (for example, a grinder) or manually. The mortar may be heated to accelerate the synthesis, or the reaction temperature may be administered to stabilize the state of synthesis. For example, experimentally, the mixing operation can be performed in a mortar placed on a hot plate.

When the ratio of decrease in mass of the final product solid electrolyte is assumed to be 100%, the reaction rate in the synthesis step S 100 may be greater than or equal to 90%. That is, a ratio P1 of a decreased mass D2 in the synthesis step S 100 to the decreased mass D1 of the final product solid electrolyte from the total mass of the raw materials may be greater than or equal to 90%. Here, the decreased mass D2 in the synthesis step S100 is the difference between the mass of the halide synthesized in the synthesis step S100 and the total mass of the raw materials before synthesis in the synthesis step S100. The ratio P1 is given by (D2/D1) × 100. In this manner, 90% or more of the unnecessary by-products can be removed in the synthesis step S 100. The mass of the halide synthesized in the synthesis step S100 may include the mass of the raw materials that have remained unsynthesized. In the subsequent heat-treatment step S300, the compositional variation in the halide can be diffused and higher homogeneity can be achieved. In other words, in the heat-treatment step S300, as the pieces of the halide move relative to one another, the pieces of the halide having compositions deviated from the intended composition diffuses and the composition as a whole becomes homogeneous. Thus, a solid electrolyte having higher ion conductivity is obtained.

(Pulverizing step S200)

In the pulverizing step S200, the halide is pulverized. The pulverizing step S200 is performed after the synthesis step S 100.

The pulverizing step S200 is, for example, a process of roughly pulverizing lumps of the halide obtained in the synthesis step S100.

In the pulverizing step S200, the halide may be pulverized to have an average particle diameter greater than or equal to 1 cm. In this manner, blocks of pulverized material in which mixing of impurities in the pulverizing step is suppressed are obtained without damaging the crystal quality inflicted by fine pulverization. Such blocks of the pulverized material have smaller surface areas than a finely pulverized powder. Thus, the deterioration of the properties caused by handling or by moisture during storage can be suppressed. As a result, a solid electrolyte having high ion conductivity is obtained. Here, the average particle diameter of the halide is a value determined by observing the pulverized material with an optical microscope in one field of view having a size that includes at least 100 halide particles, selecting 50 particles from the obtained microscope image in the descending order of the particle diameter, measuring the particle diameters of the selected particles, and determining the average value from the obtained measured values.

In the pulverizing step S200, the halide may be roughly pulverized into blocks having an average particle diameter of about 3 cm. Although fine particles of 1 cm or smaller are generated due to chipping during rough pulverization, a material that has not been subjected to fine pulverization is preferable. The fine pulverization refers to, for example, a fine pulverization process that uses what is known as pulverizing media (for example, zirconia balls). Thus, in the pulverizing step S200, large blocks (for example, an average particle diameter greater than or equal to 1 cm) of the halide are obtained as the pulverized material.

An example of the pulverizing method for a small quantity is crushing a halide that has become molten and solidified at the bottom of the sagger by using a hammer, a chisel, or the like. For large-quantity process such as mass production, a rough pulverizer such as a hammer crusher may be used. In the pulverizing step S200, the majority of the halide may turn into blocks having a particle diameter of 1 to 3 cm, for example. When a fine pulverization process is performed to obtain fine particles as described above, as is well known, the crystal quality in the particle surface layers is damaged by pulverization or impact energy, and often the ion conductivity is degraded. Moreover, in the case of a halide, since the particle surfaces that have increased due to fine pulverization lead to an increase in the reaction area with moisture, the influence of trace amounts of moisture is likely to be prominent, and the ion conductivity is likely to be decreased. The decrease in ion conductivity is often not recoverable in the post processes such as annealing. Specially, the influence of the particle surface layers is likely to be prominent in the form of a powder compact often employed in all-solid batteries. In contrast, blocks obtained by rough pulverization as those obtained in this step can suppress not only the degradation of the crystal quality but also the property degradation caused by handling between the steps (for example, from the pulverizing step to the heat treatment step) or in the storage process. In addition, for example, by not performing the fine pulverization, mixing of impurities from the pulverizing media such as zirconia balls can be avoided.

Fine particles generated by chipping may be removed by, for example, sifting through a mesh. In this manner, fine power particles can be easily removed. By removing the fine powder particles by sifting, for example, the properties of the final product solid electrolyte can be improved.

The halide blocks that are obtained by rough pulverization sometimes have discolored (for example blackened) surface layer portions due to the precipitates other than the desired halide. For example, when melting is performed in the heat treatment process, the impurities (oxides or other compositions) that have not melted may precipitate in a solder sludge state and float to form a film on the melt surface, or the reaction gas or the evaporated components during the heat treatment process may come down during the cooling process, generating solidified foreign components. Such foreign components have low ion conductivity, and thus are preferably removed or generation thereof is preferably suppressed. For example, by using a thin, long cylindrical sagger that has a smaller opening area where the precipitation occurs, the area in which the halide is exposed is decreased, and thus the influence of the phases that precipitate on the surface can be reduced. For example, according to the studies conducted by the inventors of the present invention, in the case of a halide having a true specific gravity of about 2.0 to 2.5 $g/cm^3$, the ratio of the opening area (unit: $cm^2$) of the container (for example, a sagger) to the mass (unit: g) of the halide is adjusted to, for example, 0.5 or less, and, in this manner, the influence of the precipitate phases in the surface layers can be decreased. By applying this sagger charge mass condition to the synthesis step and the heat treatment step, the foreign substance layer can be decreased. If there are only blocks, the foreign substance layers can be removed by polishing. Polishing may be conducted not only on the surface layers but also on the sagger-contacting surfaces.

As such, by suppressing or removing the foreign substances in the blocks, a more homogeneous solid electrolyte can be obtained, and high ion conductivity can be obtained.

(Heat-treatment step S300)

In the heat-treatment step S300, the halide is heat-treated. The heat-treatment step S300 is performed after the pulverizing step S200.

As in the case of the heat treatment described in the synthesis step S 100, for example, the roughly pulverized halide is placed in a dense alumina container. Here, the orientation (for example, front and back) of the blocks placed is preferably random. The compositional difference between the front and the back generated in the synthesis step S100 is randomized, and diffusion and melting that occur in the heat-treatment step S300 induce further homogeneization. As in the heat treatment in the synthesis step S 100, the sagger and the halide blocks charged into the sagger may be heat-treated such that the ratio (S/W) of the opening area S (unit: cm$^2$) of the container (for example, a sagger) to the mass W (unit: g) of the halide is, for example, less than or equal to 0.5. For example, 250 g of the halide is charged into the aforementioned thin long sagger (SSA-H alumina material, $\phi$ 90 mm, height: 150 mm). In this case, S/W = 0.26. The true specific gravities of various halides are approximately 2.0 to 2.5 g/cm$^3$; however, the foreign substance layers in the surface layers can be suppressed by performing a heat treatment at a S/W value less than or equal to 0.5.

The heat treatment is performed in, for example, an inert gas atmosphere.

The heat treatment temperature is, for example, higher than or equal to 300 ° C and lower than or equal to 600°C.

The heat treatment time is, for example longer than or equal to 1 hour and shorter than or equal to 20 hours.

A common atmosphere heat treatment furnace can be used for the heat treatment in the heat-treatment step S300. As described in the synthesis step S 100, the inert gas may be introduced indirectly into the furnace from the furnace bottom to the upper side by allowing the gas to circumvent a shielding plate so that the gas does not directly hit the wall surfaces of the sagger. In this manner, the raw materials that have not been synthesized and remained in the synthesis step S 100 and that have been contained in the halide before the heat treatment step can be homogeneously synthesized and reacted in the heat-treatment step S300, and, for example, the residue generated from cooled and solidified unnecessary reaction gas components is prevented from remaining in the solid electrolyte.

As described in the synthesis step S 100, the temperature distribution inside the sagger may be a temperature distribution width of a typical heat treatment furnace, for example, within 30 ° C.

According to the production method of the second embodiment, a homogeneous solid electrolyte can be obtained without using a special heat treatment furnace or without strict heat treatment temperature control. A halide solid electrolyte having high ion conductivity can be synthesized by such a process having excellent mass productivity.

The temperature distribution inside the sagger can be measured by, for example, placing a thermocouple at a measurement site, and monitoring the temperature throughout the heat treatment process with a logger, and, in this manner, the temperature distribution during actual synthesis can be measured.

The heat treatment temperature in the heat-treatment step S300 may be higher than the heat treatment temperature in the synthesis step S100. When heated at such a temperature, the halide melts and the diffusibility among the blocks improves, thereby achieving sufficient homogeneization. For example, the highest temperature in the heat treatment process in the heat-treatment step S300 may be at least 5 ° C higher than the highest temperature in the heat treatment process in the synthesis step S 100. In this manner, since the blocks obtained in the synthesis step S 100 easily melt again, long-distance diffusion such as between the blocks is promoted in the sagger, and a more homogeneous halide solid electrolyte is obtained.

When the ratio of decrease in mass of the final product solid electrolyte is assumed to be 100%, the reaction rate in the heat-treatment step S300 may be less than or equal to 10%. That is, a ratio P2 of a decreased mass D3 in the heat-treatment step S300 to the decreased mass D1 of the final product solid electrolyte from the total mass of the raw materials may be less than or equal to 10%. Here, the decreased mass D3 in the heat-treatment step S300 is the difference between the mass of the halide after the pulverization in the pulverizing step S200 and before the heat treatment in the heat-treatment step S300 and the mass of the halide after the heat treatment in the heat-treatment step S300. The ratio P2 is given by (D3/D1) $\times$ 100. In this manner, after the synthesis step S100 and the pulverizing step S200 are performed, a state in which unnecessary by-products are removed is generated, and a homogeneous solid electrolyte having high ion conductivity is obtained in the heat-treatment step S300. Note that the mass of the halide obtained in the heat-treatment step S300 may include the mass of the raw materials that have remained unsynthesized.

The sagger that can be used in the heat-treatment step S300 is the same as the sagger described in the synthesis step S100. The same sagger may be used in the synthesis step S100 and the heat-treatment step S300, or different saggers may be used.

The sagger may have a thin long shape. The sagger may have a cylindrical shape. The inner wall of the sagger may be rounded. Such a sagger has excellent recoverability and separability. When the roughly pulverized blocks in the pulverizing step S200 are placed in, for example, a thin long sagger and heat-treated, the halide therein is in contact with and surrounded by the sagger outer wall (side walls and a bottom) and is exposed to the outside air in the sagger opening portion only. Thus, the exposed area may be decreased by using such a sagger shape. In this manner, a solder sludge-like film generated on the melt surface layer (in other words, the surface exposed to the outside air) of the halide can be suppressed. Here, the solder sludge-like film generated is impurities or precipitate phases that remain unmelted and are generated on the surface layer by taking a film shape. As mentioned above, the ratio of the opening area S (unit: $cm^2$) of the container to the mass W (unit: g) of the halide may satisfy $S/W \leq 0.5$ ($cm^2$/g). In this manner, a homogeneous halide solid electrolyte in which unnecessary precipitate phases are suppressed is obtained.

In the production method of the second embodiment, primary synthesis of the majority of the halide is already done in the synthesis step S100. Thus, in the heat-treatment step S300, generation of the reaction gas is almost none except for the residue and the unreacted components. Thus, a container that has a small opening area with which the gas does not escape easily may be used to conduct large scale heat treatment. A homogeneous synthesis reaction can be conducted in a large scale with such heat treatment.

The sagger used in the heat-treatment step S300 is preferably a dense alumina, long and thin heat-resistant container that cannot be penetrated by the melt, as described in the synthesis step S 100. By using such a sagger, not only the surface layer precipitate layer is suppressed, but also the melt separates as the volume contraction occurs during cooling, and can be easily separated and recovered from the sagger.

For example, a halide solid electrolyte is obtained at a recovery rate greater than or equal to 99%.

Examples of the shape of the sagger other than the cylindrical shape is a prismatic shape or a gourd shape. A material that is dense and heat-resistant and has a small heat capacity, such as SiC, can be used as the material for the sagger other than alumina.

(Third embodiment)

A production method according to a third embodiment will now be described. The features described in the second embodiment may be omitted.

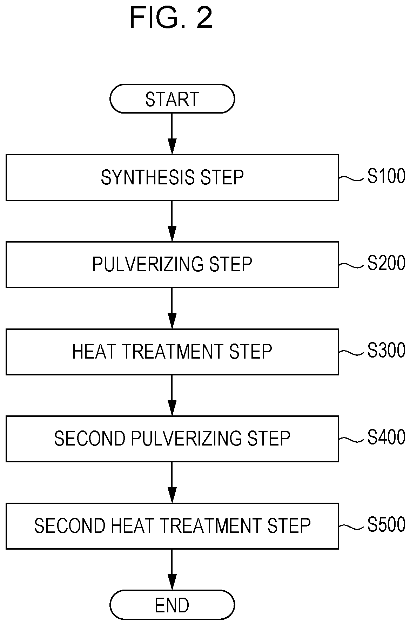

Fig. 2 is a flowchart showing the method for producing a solid electrolyte according to the third embodiment.

The production method of the third embodiment further includes, in addition to the production method of the second embodiment, a second pulverizing step S400 and a second heat treatment step S500. The second pulverizing step S400 is performed after the heat-treatment step S300. The second heat treatment step S500 is performed after the second pulverizing step S400.

According to the production method of the third embodiment, as with the production method of the second embodiment, a halide solid electrolyte in which the coefficients of variation of the M and X contents are decreased as in the halide solid electrolyte of the first embodiment is obtained. As such, according to the production method of the third embodiment, a homogeneous halide solid electrolyte in which the compositional variation is suppressed is obtained as with the production method of the second embodiment. Since the production method of the third embodiment further includes, in addition to the production method of the second embodiment, another pulverizing step and another heat treatment step, a solid electrolyte in which the compositional variation is further suppressed can be obtained. Thus, according to the production method of the third embodiment, the ion conductivity of the solid electrolyte to be obtained can be further increased.

As with the pulverizing step S200, the second pulverizing step S400 is a step of performing rough pulverization. As with the heat-treatment step S300, the second heat treatment step S500 is a step of performing heat treatment.

The heat treatment temperature in the second heat treatment step S500 is preferably at least 5 ° C higher than the heat treatment temperature in the heat-treatment step S300. In this manner, the melt blocks obtained in the heat-treatment step S300 can be again melted, and the homogeneization can be further promoted.

(Fourth embodiment)

A production method according to a fourth embodiment will now be described. The features described in the second embodiment may be omitted.

The production method of the fourth embodiment further includes, in addition to the production method of the second embodiment, (D) polishing the halide. In the description below, (D) described above is referred to as the "polishing step".

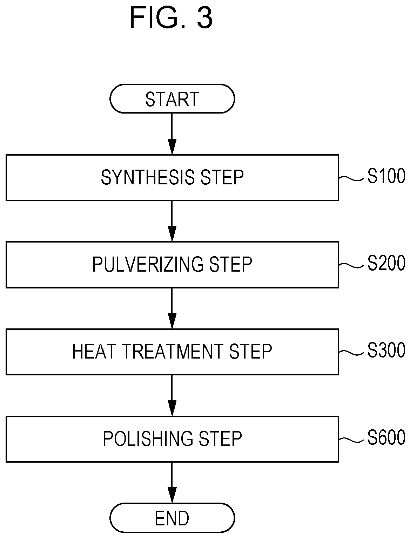

Fig. 3 is a flowchart showing the method for producing a solid electrolyte according to the fourth embodiment. In the production method illustrated in Fig. 3, the polishing step S600 is performed after the heat-treatment step S300.

According to the production method of the fourth embodiment, as with the production method of the second embodiment, a halide solid electrolyte in which the coefficients of variation of the M and X contents are decreased as in the halide solid electrolyte of the first embodiment is obtained. As such, according to the production method of the fourth embodiment, a homogeneous halide solid electrolyte in which the compositional variation is suppressed is obtained as with the production method of the second embodiment. Since the production method of the fourth embodiment further includes, in addition to the production method of the second embodiment, the polishing step S600, a solid electrolyte in which the compositional variation is further suppressed can be obtained. Thus, according to the production method of the fourth embodiment, the ion conductivity of the solid electrolyte to be obtained can be further increased.

In the polishing step S600, the synthesized halide solid electrolyte blocks are polished. As a result, for example, even when the solder sludge-like impurity film or reaction residues are present in the surface layers of the blocks, these are removed.

Polishing may involve the use of diamond files or ironwork files. For example, anything that can avoid mixing of impurities can be used as the means for polishing. Since unnecessary components can be removed by polishing, a solid electrolyte having high ion conductivity can be obtained.

Polishing is not limited to the surface layers of the blocks, and, when there are reaction layers at the sagger-contacting surfaces, polishing may be performed to remove such reaction layers.

The halide obtained in the synthesis step S 100 may be polished. In other words, the polishing step S600 may be performed not after the heat-treatment step S300 but between the synthesis step S100 and the pulverizing step S200. Alternatively, the polishing step S600 may be performed between the synthesis step S 100 and the pulverizing step S200 as well as after the heat-treatment step S300.

(Fifth embodiment)

Hereinafter, a fifth embodiment of the present disclosure is described. The features described in the first embodiment may be omitted.

In the fifth embodiment, a battery that uses the solid electrolyte of the first embodiment is described.

A battery according to the fifth embodiment includes a positive electrode, a negative electrode, and an electrolyte layer. The electrolyte layer is disposed between the positive electrode and the negative electrode. At least one selected from the group consisting of the positive electrode, the electrolyte layer, and the negative electrode contains the solid electrolyte according to the first embodiment.

The battery of the fifth embodiment exhibits excellent charge-discharge characteristics since the solid electrolyte of the first embodiment, that is, a solid electrolyte having improved ion conductivity, is contained. The battery may be an all-solid battery.

Fig. 1 is a schematic cross-sectional view illustrating the structure of a battery 1000 according to the fifth embodiment.

The battery 1000 of the fifth embodiment includes a positive electrode 201, an electrolyte layer 202, and a negative electrode 203. The electrolyte layer 202 is disposed between the positive electrode 201 and the negative electrode 203.

The positive electrode 201 includes positive electrode active material particles 204 and solid electrolyte particles 100.

The electrolyte layer 202 contains an electrolyte material. The electrolyte material is, for example, a solid electrolyte.

The negative electrode 203 includes negative electrode active material particles 205 and solid electrolyte particles 100.

The solid electrolyte particles 100 are particles that contain the solid electrolyte of the first embodiment. The solid electrolyte particles 100 may be particles composed of the solid electrolyte of the first embodiment or may be particles that contain, as a main component, the solid electrolyte of the first embodiment. Here, the particles containing, as a main component, the solid electrolyte of the first embodiment means particles in which the component contained in the largest amount in terms of molar ratio is the solid electrolyte of the first embodiment.

The solid electrolyte particles 100 may have a median diameter greater than or equal to 0.1 $\mu$m and less than or equal to 100 $\mu$m, or a median diameter greater than or equal to 0.5 $\mu$m and less than or equal to 10 $\mu$m. In such a case, the solid electrolyte particles 100 have higher ion conductivity.

The positive electrode 201 contains a material that can intercalate and deintercalate metal ions (for example, lithium ions). This material is, for example, a positive electrode active material (for example, the positive electrode active material particles 204).

Examples of the positive electrode active material include lithium-containing transition metal oxides, transition metal fluorides, polyanion materials, fluorinated polyanion materials, transition metal sulfides, transition metal oxyfluorides, transition metal oxysulfides, and transition metal oxynitrides. An example of the lithium-containing transition metal oxide is $Li(Ni,Co,Al)O_2$ or $LiCoO_2$.

In the present disclosure, the notation "(A,B,C)" in the formula means "at least one selected from the group consisting of A, B, and C". For example, "(Ni,Co,Al)" has the same meaning as the "at least one selected from the group consisting of Ni, Co, and Al ".

The positive electrode active material particles 204 may have a median diameter greater than or equal to 0.1 $\mu$m and less than or equal to 100 $\mu$m. When the positive electrode active material particles 204 have a median diameter greater than or equal to 0.1 $\mu$m, the positive electrode active material particles 204 and the solid electrolyte particles 100 in the positive electrode 201 are in an excellently dispersed state. As a result, the charge-discharge characteristics of the battery are improved. When the positive electrode active material particles 204 have a median diameter less than or equal to 100 $\mu$m, lithium diffuses faster in the positive electrode active material particles 204. As a result, the battery can operate at high output.

The positive electrode active material particles 204 may have a median diameter greater than that of the solid electrolyte particles 100. In this manner, the positive electrode active material particles 204 and the solid electrolyte particles 100 in the positive electrode 201 are in an excellently dispersed state.

In order to increase the energy density and the output of the battery, the ratio of the volume of the positive electrode active material particles 204 to the total volume of the positive electrode active material particles 204 and the solid electrolyte particles 100 in the positive electrode 201 may be greater than or equal to 0.30 and less than or equal to 0.95.

In order to increase the energy density and the output of the battery, the positive electrode 201 may have a thickness greater than or equal to 10 $\mu$m and less than or equal to 500 $\mu$m.

The electrolyte layer 202 contains an electrolyte material. The electrolyte material is, for example, the solid electrolyte of the first embodiment. The electrolyte layer 202 may be a solid electrolyte layer.

The electrolyte layer 202 may be solely composed of the solid electrolyte of the first embodiment. Alternatively, the electrolyte layer 202 may be solely composed of a solid electrolyte different from the solid electrolyte of the first embodiment.

Examples of the solid electrolyte different from the solid electrolyte of the first embodiment include $Li_2MgX'_4$, $Li_2FeX'_4$, $Li(Al,Ga,In)X'_4$, $Li_3(Al,Ga,In)X'_6$, and LiI. Here, X' is at least one selected from the group consisting of F, Cl, Br, and I. Thus, the solid electrolyte different from the solid electrolyte of the first embodiment may be a halogen atom-containing solid electrolyte, in other words, a halide solid electrolyte.

In the description below, the solid electrolyte of the first embodiment is referred to as the first solid electrolyte. The solid electrolyte different from the solid electrolyte of the first embodiment is referred to as the second solid electrolyte.

The electrolyte layer 202 may contain the second solid electrolyte in addition to the first solid electrolyte. In the electrolyte layer 202, the first solid electrolyte and the second solid electrolyte may be evenly dispersed. A layer made of the first solid electrolyte and a layer made of the second solid electrolyte may be stacked along the stacking direction of the battery 1000.

The electrolyte layer 202 may have a thickness greater than or equal to 1 $\mu$m and less than or equal to 1000 $\mu$m. When the electrolyte layer 202 has a thickness greater than or equal to 1 $\mu$m, short circuiting between the positive electrode 201 and the negative electrode 203 rarely occurs. When the electrolyte layer 202 has a thickness less than or equal to 1000 $\mu$m, the battery can operate at high output.

The negative electrode 203 contains a material that can intercalate and deintercalate metal ions such as lithium ions. This material is, for example, a negative electrode active material (for example, the negative electrode active material particles 205).

Examples of the negative electrode active material include metal materials, carbon materials, oxides, nitrides, tin compounds, and silicon compounds. The metal material may be a single metal or an alloy. Examples of the metal material include lithium metal and lithium alloys. Examples of the carbon materials include natural graphite, coke, graphitizing carbon, carbon fibers, spherical carbon, synthetic graphite, and amorphous carbon. From the viewpoint of the capacity density, a preferable example of the negative electrode active material is silicon (Si), tin (Sn), a silicon compound, or a tin compound.

The negative electrode active material particles 205 may have a median diameter greater than or equal to 0.1 $\mu$m and less than or equal to 100 $\mu$m. When the negative electrode active material particles 205 have a median diameter greater than or equal to 0.1 $\mu$m, the negative electrode active material particles 205 and the solid electrolyte particles 100 in the negative electrode 203 are in an excellently dispersed state. As a result, the charge-discharge characteristics of the battery are improved. When the negative electrode active material particles 205 have a median diameter less than or equal to 100 $\mu$m, lithium diffuses faster in the negative electrode active material particles 205. As a result, the battery can operate at high output.

The negative electrode active material particles 205 may have a median diameter greater than that of the solid electrolyte particles 100. In this manner, the negative electrode active material particles 205 and the solid electrolyte particles 100 in the negative electrode 203 are in an excellently dispersed state.

In order to increase the energy density and the output of the battery, the ratio of the volume of the negative electrode active material particles 205 to the total volume of the negative electrode active material particles 205 and the solid electrolyte particles 100 in the negative electrode 203 may be greater than or equal to 0.30 and less than or equal to 0.95.

In order to increase the energy density and the output of the battery, the negative electrode 203 may have a thickness greater than or equal to 10 $\mu$m and less than or equal to 500 $\mu$m.

At least one selected from the group consisting of the positive electrode 201, the electrolyte layer 202, and the negative electrode 203 may contain the second solid electrolyte for the purposes of increasing the ion conductivity, chemical stability, and electrochemical stability.

As mentioned above, the second solid electrolyte may be a halide solid electrolyte.

Examples of the halide solid electrolyte used as the second solid electrolyte include $Li_2MgX'_4$, $Li_2FeX'_4$, $Li(Al,Ga,In)X'_4$, $Li_3(Al,Ga,In)X'_6$, and LiI. Here, X' is at least one element selected from the group consisting of F, Cl, Br, and I.

Another example of the halide solid electrolyte used as the second solid electrolyte is a compound represented by $Li_pMe_qY_rZ_6$. Here, p + m'q + 3r = 6, and r > 0. Me is at least one selected from the group consisting of metalloids and metal elements other than Li and Y. Here, the value m' represents the valence of Me. Z is at least one selected from the group consisting of F, Cl, Br, and I. The "metalloids" are B, Si, Ge, As, Sb, and Te. The "metal elements" are all group 1 to 12 elements (excluding hydrogen) in the periodic table and all group 13 to 16 elements (excluding B, Si, Ge, As, Sb, Te, C, N, P, O, S, and Se) in the periodic table. In order to increase the ion conductivity of the halide solid electrolyte material, Me may be at least one selected from the group consisting of Mg, Ca, Sr, Ba, Zn, Sc, Al, Ga, Bi, Zr, Hf, Ti, Sn, Ta, and Nb.

The second solid electrolyte may be a sulfide solid electrolyte.

Examples of the sulfide solid electrolyte include $Li_2S$-$P_2S_5$, $Li_2S$-$SiS_3$, $Li_2S$-$B_2S_3$, $Li_2S$-$GeS_3$, $Li_{3.25}Ge_{0.25}P_{0.75}S_4$, and $Li_{10}GeP_2Si_2$.

The second solid electrolyte may be an oxide solid electrolyte.

Examples of the oxide solid electrolyte include:

(i) NASICON solid electrolytes such as $LiTi_2(PO_4)_3$ and element substitution products thereof,
(ii) perovskite solid electrolytes such as $(LaLi)TiO_3$,
(iii) LISICON solid electrolytes such as $Li_{14}ZnGe_4O_{16}$, $Li_4SiO_4$, $LiGeO_4$, and element substitution products thereof,
(iv) garnet solid electrolytes such as $Li_7La_3Zr_2O_{12}$ and element substitution products thereof, and
(v) $Li_3PO_4$ and N-substitution products thereof.

The second solid electrolyte may be an organic polymer solid electrolyte.

An example of the organic polymer solid electrolyte is a compound between a polymer compound and a lithium salt.

The polymer compound may have an ethylene oxide structure. The polymer compound having an ethylene oxide structure can contain a large amount of lithium salts, and thus the ion conductivity can be further increased.

Examples of the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone. Alternatively, a mixture of two or more lithium salts selected from among these may be used.

For the purpose of facilitating lithium ion exchange and improving the output characteristics of the battery, at least one selected from the positive electrode 201, the electrolyte layer 202, and the negative electrode 203 may contain a nonaqueous electrolyte solution, a gel electrolyte, or an ionic liquid.

The nonaqueous electrolyte solution contains a nonaqueous solvent and a lithium salt dissolved in the nonaqueous solvent.

Examples of the nonaqueous solvent include cyclic carbonate solvents, linear carbonate solvents, cyclic ether solvents, linear ether solvents, cyclic ester solvents, linear ester solvents, and fluorine solvents. Examples of the cyclic carbonate solvents include ethylene carbonate, propylene carbonate, and butylene carbonate. Examples of the linear carbonate solvents include dimethyl carbonate, ethyl methyl carbonate, and diethyl carbonate. Examples of the cyclic ether solvents include tetrahydrofuran, 1,4-dioxane, and 1,3-dioxolane. Examples of the linear ether solvents include 1,2-dimethoxyethane and 1,2-diethoxyethane. An example of the cyclic ester solvents is $\gamma$-butyrolactone. An example of the linear ester solvents is methyl acetate. Examples of the fluorine solvents include fluoroethylene carbonate, methyl fluoropropionate, fluorobenzene, fluoroethyl methyl carbonate, and fluorodimethylene carbonate. One nonaqueous solvent selected from these may be used alone. Alternatively, a mixture of two or more nonaqueous solvents selected from among these may be used.

Examples of the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone. Alternatively, a mixture of two or more lithium salts selected from among these may be used. The lithium salt concentration is, for example, greater than or equal to 0.5 mol/L and less than or equal to 2 mol/L.

A polymer material impregnated with a nonaqueous electrolyte solution can be used as the gel electrolyte. Examples of the polymer material include polyethylene oxide, polyacrylonitrile, polyvinylidene fluoride, polymethyl methacrylate, and polymers having ethylene oxide bonds.

Examples of the cation contained in the ionic liquid include:

(i) aliphatic linear quaternary salts such as tetraalkylammonium and tetraalkylphosphonium,
(ii) aliphatic cyclic ammoniums such as pyrrolidiniums, morpholiniums, imidazoliniums, tetrahydropyrimidiniums, piperaziniums, and piperidiniums, and
(iii) nitrogen-containing heterocyclic aromatic cations such as pyridiniums and imidazoliums.

Examples of the anion contained in the ionic liquid include $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, and $C(SO_2CF_3)_3^-$.

The ionic liquid may contain a lithium salt.

At least one selected from the group consisting of the positive electrode 201, the electrolyte layer 202, and the negative electrode 203 may contain a binder to improve adhesion between particles.

Examples of the binder include polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrenebutadiene rubber, and carboxymethylcellulose. Copolymers can also be used as the binder. An example of such a binder is a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from among the aforementioned materials may be used as the binder.

At least one selected from the group consisting of the positive electrode 201 and the negative electrode 203 may contain a conductive additive to improve the electronic conductivity.

Examples of the conductive additive include:

(i) graphites such as natural graphite and synthetic graphite,
(ii) carbon blacks such as acetylene black and Ketjen black,
(iii) conductive fibers such as carbon fibers and metal fibers,
(iv) fluorinated carbon,
(v) metal powders such as aluminum,
(vi) conductive whiskers such as zinc oxide and potassium titanate,
(vii) conductive metal oxides such as titanium oxide, and
(viii) conductive polymer compounds such as polyaniline, polypyrrole, and polythiophene. For cost reduction, the conductive additive of (i) or (ii) above may be used.

Examples of the shape of the battery of the fifth embodiment include a coin shape, a cylinder shape, a prism shape, a sheet shape, a button shape, a flat shape, and a multilayer shape.

The battery of the fifth embodiment may be produced by preparing materials for forming a positive electrode, materials for forming an electrolyte layer, and materials for forming a negative electrode, and preparing a multilayer body in which a positive electrode, an electrolyte layer, and a negative electrode are arranged in this order.

(Other embodiments)

Although the solid electrolyte, the method for producing the solid electrolyte, and the battery of the present disclosure have been described above through the embodiments, the present disclosure is not limited to these embodiments.

For example, although the solid electrolyte is placed in a sagger and heat-treated in the production methods of the second to fourth embodiments described above, this feature is not limiting. For example, synthesis may be performed by various heat-treatment processes such as heat treatment in a rotary kiln or by spraying powder such as spray drying.

EXAMPLES

In the description below, the present disclosure are described in further detail through Examples and Comparative Examples.

Solid electrolytes of Samples 1 to 19 were produced. Sample 1 corresponds to a comparative example in which neither the pulverizing step nor the heat treatment step was performed after the synthesis step. Sample 2 corresponds to a comparative example in which the heat treatment step was performed without the pulverizing step after the synthesis step. Samples 3 to 19 correspond to Examples in which all of the synthesis step, the pulverizing step, and the heat treatment step were performed. The synthesis step, the pulverizing step, and the heat treatment step performed in Examples will now be described in detail. Furthermore, specific conditions of the individual steps employed in Samples 1 to 19 are indicated in Table 1.

(Synthesis step)

As starting materials, chemically high-purity powders of LiCl, $NH_4Cl$, LiBr, and $Y_2O_3$ were prepared. Next, the starting materials were weighed in a dry room having a dew point of -40 $\pm$5 ° C so that the composition after synthesis would be $Li_3Y(Cl_{0.6}Br_{0.4})_3$.

The mixed raw materials were mixed evenly with a pestle and an agate mortar for about 30 minutes in a glove box having an argon atmosphere having a dew point of -85 to - 75 ° C.

In to a high-purity (SSA-H) alumina cylindrical sagger (diameter $\phi$: 40 mm, height: 120 mm), about 50 g of the mixed raw materials were placed. The value of S/W was about 0.256. To promote release of the reaction gas, spacers (thickness: 5 to 10 mm) were placed on an outer edge portion of the upper surface of the sagger, and a lid was placed thereon to prevent foreign substance from landing thereon and suppress scattering of bumping melt droplets. Next, a sagger was placed on three low-heat-capacity mullite support rods having a porosity of about 20% disposed at the center portion of the heat treatment furnace, and five saggers were gathered around the center of the furnace and heat-treated. The support rods had a length of 10 mm, a width of 10 mm, and a height of 10 mm. Three support rods were placed under one sagger so that the sagger was separated from the furnace bottom. The heater heat (in other words, radiation heat) and the inert gas were allowed to circulate around the bottoms of the saggers as well. After the furnace door was closed to seal the furnace, nitrogen gas was flown in through an introduction port at the furnace bottom at a rate of 1 to 3 L/min and discharged through a discharge port in the upper side of the ceiling, and the gas was kept flowing until the heat treatment was completed. Here, a low-heat-capacity mullite plate having a thickness of 3 mm and a porosity of 20% was placed at about the midpoint between the gas introduction port and the sagger so that the introduced gas was partially shielded and did not directly hit the sagger. The distance between the gas introduction port and the sagger was about 10 cm. As indicated in Table 1, Samples 1 to 14 involved a heat treatment temperature of 450 ° C, this temperature was kept for 2 hours, and then cooling was performed to room temperature at about 100 ° C/h. The heat treatment temperature was the actual temperature inside the sagger.

In Samples 15 to 19, the heat treatment temperature was set to 470 ° C. The melting point of the halide was about 350 ° C. Since the halide was heat-treated at a temperature higher than or equal to the melting point, the halide melted, then solidified, and thus was obtained as semitransparent white blocks. The ratio of decrease in mass after the heat treatment in this synthesis step was about 30%, and this corresponded to the amount of matter discharged in the synthetic reaction (in other words, the amount of the by-product reaction gas). This ratio of decrease in mass was used to determine the ratio P1 of the decreased mass D2 in the synthesis step to the decreased mass D1 of the final product solid electrolyte from the total mass of the raw materials, and the ratio P1 was about 90 to 100%. Thus, from the viewpoint of the decrease in mass, the reaction had been carried out until 90% to 100% of the final synthetic product.

(Pulverizing step)

The halide blocks in the sagger were roughly pulverized with a chisel in a glove box and recovered. Next, the roughly pulverized blocks taken out of the saggers were recovered and sealed with an inert gas. In Samples 1 and 2, the pulverizing step was not performed. The average particle diameter of the halide blocks obtained by this rough pulverization is indicated in Table 1. Here, the average particle diameter of the halide blocks after pulverization was determined by the method mentioned above, that is, by is a value determined by observing the pulverized material with an optical microscope in one field of view having a size that includes at least 100 halide particles, selecting 50 particles from the obtained microscope image in the descending order of the particle diameter, measuring the particle diameters of the selected particles, and determining the average value from the obtained measured values. The particle diameter of the halide particles was defined to be the diameter of a circle having an area equal to the area of the microscope image of the halide particle.

(Heat-treatment step)

A heat-treatment furnace having the same atmosphere as the synthesis step was used. As in the synthesis step, a sagger made of a dense, high-purity alumina material and having a cylindrical shape with $\phi$90 and a height of 180 mm was used, and about 160 g of the blocks obtained in the pulverizing step were placed therein. The value of S/W was about 0.41. The sagger was filled substantially up to the top. As in the synthesis step, spacers were used to form a gap of about 5 mm between the lid of the sagger and the sagger, and the heat treatment was performed in a nitrogen flow (flow rate was the same as in the synthesis step) atmosphere. In Samples 2 to 11, the heat treatment temperature was set to 455 ° C, which was at least 5°C higher than that in the synthesis step and kept thereat for 2 hours, followed by cooling to room temperature at 100°C/h, and then samples were removed from the furnace. As indicated in Table 1, in Samples 13, 14, and 16 to 19, the heat treatment temperature was set to a temperature higher than that in the synthesis step.

In Samples 12 and 15, heat treatment was performed at the same temperature as in the synthesis step. In Sample 1, the heat treatment step was not performed.

As indicated in Table 1, for each of the samples, the value of S/W was changed by adjusting the weights of various charged materials and the shape of the sagger, and experiments were conducted with or without a lid on the sagger and with or without a shielding plate. The shielding plate is a plate between the gas introduction port and the sagger.

The ratio of decrease in mass in the heat treatment step was independent from the heat treatment temperature and was about 0 to 3%. Compared to the ratio of decrease in mass of 30% in the synthesis step, the remainder of the synthetic reaction was estimated to be 0 to 10 mass%. In other words, the ratio P2 of the decreased mass D3 in the heat treatment step to the decreased mass D1 of the final product solid electrolyte from the total mass of the raw materials was determined from the aforementioned ratio of decrease in mass in the heat treatment step, and was about 0 to 10%. As such, it was confirmed that the majority of the synthetic reaction, that is, about 90 to 100%, had taken place in the synthesis step.

As described above, it was considered that 90% or more of the synthetic reaction had taken place in the synthesis step, the blocks were roughly pulverized in the pulverizing step, and the synthetic reaction of the trace residue components (for example less than or equal to 10%) had taken place in the heat treatment step while the compositional differences were dispersed to achieve homogeneization. It was considered that, due to such a series of the production methods, a halide solid electrolyte having high ion conductivity was obtained.

(Polishing step)

In Sample 18, the polishing step was performed after the synthesis step. In Sample 19, the polishing step was performed after the synthesis step and after the heat treatment step. In the polishing, the surface layer of the halide where discoloration (gray to black) was observed with naked eye was polished with a metal file to a depth of about 400 to 500 $\mu$m.

(Evaluation of halide solid electrolyte)

The synthesized halide solid electrolyte blocks were pulverized in an agate mortar for about 10 minutes. As a result, a powder of the halide solid electrolyte about 10 to 50 $\mu$m in size was obtained. Here, the coarse particles were separated and removed by sifting through a SUS 100 mesh. Next, the crystal phases were evaluated by powder X-ray diffractometry. For the ion conductivity, the powder of the halide solid electrolyte was placed in a die having a diameter of 10 mm and pressed into a powder compact sample at a pressure of about 3 t/cm with a uniaxial oil hydraulic press, and the ion conductivity was calculated from the area, the thickness, and the room-temperature impedance characteristics of this powder compact sample. The impedance was measured under a pressure at room temperature. In the impedance measurement, the measurement frequency was 10 Hz to 10 MHz, the measurement voltage was 1 Vrms, and no DC bias was applied; in addition, the differences in electrical length between the cables and the measurement jigs were offset in the evaluation.

Among the aforementioned samples, those which have different levels of ion conductivity were analyzed for their compositions in the microstructures. The compositional analysis was performed by using EPMA on the blocks having a structure not yet heat-treated for evaluation. A sample of the halide solid electrolyte was polished with an ion polisher. This polishing was conducted to decrease the influence of the irregularities on the composition detection sensitivity. The polished section was point-analyzed by setting the spot size $\phi$ to 1 $\mu$m. Twenty spots selected at random were measured, and the compositional structure was obtained in terms of atom% for each component. From the obtained values at the respective points, the average values ($A_M$ and Ax) of the M and X atom contents, the standard deviations ($\sigma_M$ and $\sigma_X$), and the coefficients of variation ($\sigma_M/A_M$ and $\sigma_X/\sigma_X$) were calculated. The sample with a large variation in composition has a large standard deviation. Furthermore, to facilitate comparison between samples and elements having different average values, the coefficients of variation ($\sigma_M/A_M$ and $\sigma_X/A_X$) obtained by standardizing the standard deviation by the average value were also calculated. Here, in the samples with high ion conductivity, oxygen (O) was detected only at 1 or 2 points, and thus only the average value, and not the standard deviation, was indicated. Furthermore, since Li cannot be analyzed by EPMA, no reference was made.

The results obtained as described above are indicated in Table 1. The compositional variations in eight samples having different levels of ion conductivity are indicated in Table 2.

[Table 1]

| Sample No. | (A) Synthesis step | | (B) Pulverizing step | (C) Heat-treatment step | | | Ion conductivity | Remarks |
|---|---|---|---|---|---|---|---|---|
| | Heat treatment conditions (temperature-time) | S/W cm²/g | Pulverizing size (average particle diameter) | Heat treatment condition (temperature-time) | S/W cm²/g | Others | mS/cm | |
| 1 | 450°C-2h | 0.256 | No pulverization | No heat treatment | - | - | 1.45 | |
| 2 | 450°C-2h | 0.256 | No pulverization | 455°C-2h | 0.41 | - | 1.48 | |
| 3 | 450°C-2h | 0.256 | 70 μm | 455°C-2h | 0.41 | - | 2.06 | |
| 4 | 450°C-2h | 0.256 | 5.5 mm | 455°C-2h | 0.41 | - | 2.12 | |
| 5 | 450°C-2h | 0.256 | 2.3 cm | 455°C-2h | 0.41 | - | 2.34 | |
| 6 | 450°C-2h | 0.256 | 2.3 cm | 455°C-2h | 0.41 | No lid on sagger | 2.16 | |
| 7 | 450°C-2h | 0.256 | 2.3 cm | 455°C-2h | 0.41 | No shielding plate | 2.01 | |
| 8 | 450°C-2h | 0.256 | 2.3 cm | 455°C-2h | 0.5 | - | 2.32 | |
| 9 | 450°C-2h | 0.256 | 2.3 cm | 455°C-2h | 0.6 | - | 1.94 | |
| 10 | 450°C-2h | 0.5 | 2.3 cm | 455°C-2h | 0.41 | - | 2.31 | |
| 11 | 450°C-2h | 0.6 | 2.3 cm | 455°C-2h | 0.41 | - | 1.87 | |
| 12 | 450°C-2h | 0.256 | 2.3 cm | 450°C-2h | 0.41 | - | 2.02 | |
| 13 | 450°C-2h | 0.256 | 2.3 cm | 460°C-2h | 0.41 | - | 2.34 | |
| 14 | 450°C-2h | 0.256 | 2.3 cm | 470°C-2h | 0.41 | - | 2.31 | |
| 15 | 470°C-2h | 0.256 | 2.3 cm | 470°C-2h | 0.41 | - | 2.01 | |
| 16 | 470°C-2h | 0.256 | 2.3 cm | 475°C-2h | 0.41 | - | 2.19 | |
| 17 | 470°C-2h | 0.256 | 2.3 cm | 480°C-2h | 0.41 | - | 2.28 | |
| 18 | 470°C-2h | 0.256 | 2.3 cm | 480°C-2h | 0.41 | - | 2.3 | Surface layer polished (after synthesis step) |
| 19 | 470°C-2h | 0.256 | 2.3 cm | 480°C-2h | 0.41 | - | 2.35 | Surface layer polished (after synthesis step and after heat-treatment step) |

[Table 2]

| Sample No. | Y | | | Cl | | | Br | | | O |
|---|---|---|---|---|---|---|---|---|---|---|
| | Average value $A_M$ (at.%) | Standard deviation $\sigma_M$ (at. %) | Coefficient of variation $\sigma_M/A_M$ | Average value Ax (at. %) | Standard deviation $\sigma_X$ (at.%) | Coefficient of variation $\sigma_X/A_X$ | Average value Ax (at. %) | Standard deviation $\sigma_X$ (at.%) | Coefficient of variation $\sigma_X/A_X$ | Average value of O content (at. %) |
| 1 | 15.7 | 9.8 | 62.4 | 51.2 | 12.1 | 23.6 | 30.1 | 8.1 | 26.9 | 3.1 |
| 2 | 16.5 | 9.5 | 57.6 | 49.9 | 10.2 | 20.4 | 28.8 | 7.4 | 25.7 | 4.8 |
| 5 | 15 | 0.57 | 3.8 | 52.5 | 2.44 | 4.6 | 32.2 | 3.1 | 9.6 | 0.4 |
| 12 | 15.6 | 1.55 | 9.9 | 52.2 | 5.23 | 100 | 30.2 | 5.1 | 14.9 | 2.1 |
| 13 | 15.8 | 0.52 | 3.3 | 51.8 | 2.34 | 4.5 | 32 | 3.9 | 12.2 | 0.4 |
| 15 | 16.2 | 1.62 | 100 | 52.3 | 5.14 | 9.8 | 31.2 | 3.1 | 9.9 | 1.3 |
| 16 | 15.7 | 0.76 | 4.8 | 51.9 | 3.2 | 6.2 | 31.7 | 3.6 | 11.4 | 0.6 |
| 17 | 15.5 | 0.54 | 3.5 | 52.2 | 2.44 | 4.7 | 31.9 | 4.2 | 13.2 | 0.4 |

(Observations)

As indicated in Tables 1 and 2, the compositional variation in the obtained solid electrolyte was large when only the synthesis step was performed as in Sample 1. The coefficient of variation of the solid electrolyte of Sample 1 was 62.4 for Y, 23.6 for Cl, and 26.9 for Br, and this was very large compared to the solid electrolyte samples of Examples.

The solid electrolytes of all samples indicated in Table 2 were subjected to X-ray diffractometry. It was confirmed that the solid electrolytes of all samples had similar structures represented by $Li_3Y(Cl_{0.6}Br_{0.4})_3$. It was thus contemplated that the reason why the ion conductivity of the solid electrolyte of Sample 1 was as low as 1.45 mS/cm was that the compositional variation was large, in other words, the coefficients of variation of Y, which is the element M, and Cl and Br, which are the element X, were large. It is considered difficult to obtain an even halide solid electrolyte by merely performing the synthesis step, since the composition in the solid electrolyte becomes uneven and the variation in characteristics in the structure increases.

When the pulverizing step was omitted and the heat treatment step was performed after the synthesis step as in Sample 2, in other words, when blocks obtained in the synthetic step were directly heat-treated again, the variation in composition generated in the synthesis step was not resolved, the compositional variation remained large, and little improvement in ion conductivity was observed.

From the solid electrolytes of Samples 1 and 2, oxygen derived from yttrium oxide used as a starting material was detected. This is presumably because the reaction did not occur homogeneously in the synthesis step, and the oxygen component remained in the solid electrolyte. Note that Y and O were detected at the same site and co-exited in the EPMA point analysis and element mapping. Thus, it is considered that oxygen exists as $Y_2O_3$.

Compared to Samples 1 and 2, which are comparative examples, Samples 3 to 19, which are Examples and which involved performing the synthesis step, the pulverizing step, and the heat treatment step in this order showed high ion conductivity since the variations of the individual components were suppressed.

Comparing Sample 5 with Samples 3 and 4, it was revealed that the ion conductivity improved further when the pulverization size was set to 1 cm or larger in the pulverizing step. Comparing Samples 3 to 5, it was revealed that there is a tendency in which the ion conductivity improves with the increase in the pulverization size. Such a difference in ion conductivity for the pulverization level in the pulverizing step is presumably attributable to the impact action caused by pulverization of the blocks since the impact action affects the crystal quality of the joint surface of the powder compact, that is, the surface layers of the particles. Thus, in the pulverization step, rough pulverization within the range that does not notably affect the crystal quality is preferable, and it is considered from the results of Samples 5 to 19 that higher ion conductivity is obtained as long as the pulverization size is greater than or equal to about 1 cm. Note that, in Sample 2 where no pulverizing step was performed, the blocks in the heat treatment step were excessively large, and, presumably thus, the diffusion in the composition among the blocks was poor, and the ion conductivity was low. It is considered from these results that the rough pulverization size in the pulverizing step is preferably 1 to 3 cm from the viewpoint of obtaining high ion conductivity by the homogeneous diffusion effect.

The heat treatment condition in the synthesis step and the heat treatment step in Samples 5, 12, 13, and 14 was 450 ° C in the synthesis step and 450 to 470°C in the heat treatment step. In Samples 15 to 17, the condition was 470°C in the synthesis step and 470 ° C or 480 ° C in the heat treatment step. As is clear from the comparison of these samples, it was found that the ion conductivity is further improved when the heat treatment temperature in the heat treatment step is at least 5 ° C higher than the heat treatment temperature in the synthesis step. This is presumably because the compositional variation generated in the synthesis step could be made homogeneous as diffusion was induced in the melt obtained in the heat-treatment in the heat treatment step.

The effect of using or not using the lid on the sagger and the effect of using or not using the shielding plate at the gas introduction port in the heat treatment step can be confirmed by comparing the results of Samples 5 to 7. It is considered from comparison of Samples 5 and 6 that, since there was a lid on the sagger, the reaction gas components that did not flow out but remained afloat during cooling after the heat treatment were inhibited from mixing into the solid electrolyte, and thus the ion conductivity was further improved. It is considered from comparison of Samples 5 and 7 that, since there was a shielding plate during the heat treatment, the temperature distribution in the sagger became more even, the reaction progressed more homogeneously, and thus the ion conductivity was further improved.

The surfaces of the heat-treated blocks may be polished, and the effect of polishing can be confirmed from the results of Samples 18 and 19 relative to Sample 17. In the polishing, the surface layer where discoloration (gray to black) was observed with naked eye, that is, the exposed surface during the heat treatment, was polished to a depth of about 400 to 500 $\mu$m. By adding this polishing step, the ion conductivity could be further improved. Presumably, impurities are present in the discolored portion of the surface. Thus, since the impurities present in the surface layers of the blocks could be removed by this polishing, the compositional variation was further reduced, and the ion conductivity was improved. It should be noted that, in Examples, the improving effect brought about by polishing is not very prominent. However, the improvements become more prominent if the blocks have less normal portions, and thus polishing is an easy and effective measure. For example, the discoloration can be expressed as a composition outside the normal distribution (within the range of average composition $\pm 3\sigma$) when statistically expressed in terms of average composition and the standard deviation $\sigma$ from the results of the multipoint compositional analysis. Here, the average composition means the average values of the contents of the individual elements constituting the solid electrolyte. Furthermore, the composition outside the normal distribution can be expressed as less than average composition $-3\sigma$ and more than average composition $+3\sigma$. It is considered that the ion conductivity is further improved by removing the composition region (in other words, the discolored portion) outside the average composition $\pm 3\sigma$.

As indicated in Table 2, there is a close relationship between the ion conductivity and the variation in the microstructure-level composition of the blocks, and it was found that high ion conductivity was exhibited when the coefficients of variation of the constitutional elements M and X content were relatively small and when the detected oxygen amount was small. In Examples, oxygen precipitated as yttrium oxide ($Y_2O_3$), and Br detected in high concentrations was mainly present in the surface layers. For example, an ion conductivity as high as 2.0 mS/cm or higher was obtained when the coefficients of variation were Y $\leq$ 10, Cl $\leq$ 10, and Br $\leq$ 15. Here, the oxygen detection amount (that is, the average value of the oxygen content) was less than or equal to 2.5 atom%. In contrast, in Samples 1 and 2 where the coefficients of variation of the contents of the constituent elements M and X were large, the ion conductivity was less than 1.5 mS/cm, and was low.

It was found from the results described above that a halide solid electrolyte that is homogeneous with the compositional variation suppressed and that has high ion conductivity was obtained by the production methods of the present disclosure. The solid electrolyte of the present disclosure exhibits high ion conductivity when coefficient of variation of M content $\leq$ 10 and coefficient of variation of X content $\leq$ 15. Moreover, higher ion conductivity is obtained by suppressing the impurity oxygen content to be less than or equal to 2.5 atom%.

Industrial Applicability

A solid electrolyte and a method for producing a solid electrolyte of the present disclosure are used in, for example, a battery (for example, an all-solid lithium ion secondary battery).

Reference Signs List

| | |
|---|---|
| 100 | solid electrolyte particles |
| 101 | powder of solid electrolyte |
| 201 | positive electrode |
| 202 | electrolyte layer |
| 203 | negative electrode |
| 204 | positive electrode active material particles |
| 205 | negative electrode active material particles |
| 1000 | battery |

**Claims**

1. A solid electrolyte comprising Li, M, and X,

   wherein M is at least one selected from the group consisting of metalloids and metal elements other than Li,
   X is at least one selected from the group consisting of F, Cl, Br, and I, and
   in the solid electrolyte,

   a coefficient of variation of a content of the M is less than or equal to 10, and
   a coefficient of variation of a content of the X is less than or equal to 15,

   where the coefficients of variation of the contents of the M and the X in the solid electrolyte are determined by a following method:

   for the solid electrolyte, an average value $A_M$ and a standard deviation $\sigma_M$ of the content of the M and an average value Ax and a standard deviation $\sigma_X$ of the content of the X are determined, and
   by using the average value $A_M$ and the standard deviation $\sigma_M$ of the content of the M, the coefficient of variation of the content of the M is determined, and by using the average value Ax and the standard deviation

$\sigma_X$ of the content of the X, the coefficient of variation of the content of the X is determined.

2. The solid electrolyte according to claim 1,

wherein, in the solid electrolyte, an average value of a content of O atoms relative to a total of all atoms other than Li atoms is less than or equal to 2.5 atom%, and
the average value of the content of O atoms relative to the total of all atoms other than Li atoms is determined by a following method:

for the solid electrolyte, arbitrarily selected twenty spots having a spot size of 1 $\mu$m are set, and a content of O atoms relative to a total of all atoms other than Li atoms is determined at each of the spots with an electron probe micro analyzer, and
then the average value of the content of O atoms is determined from results of the contents of O atoms at the twenty spots.

3. The solid electrolyte according to claim 1 or 2,
wherein a content of atoms of the M determined by an electron probe micro analyzer satisfies formula (1) below:

$$(1): A_M - 3\sigma_M \leq \text{content of M atoms} \leq A_M + 3\sigma_M$$

4. The solid electrolyte according to any one of claims 1 to 3,
wherein a content of atoms of the X determined by an electron probe micro analyzer satisfies formula (2) below:

$$(2): A_X - 3\sigma_X \leq \text{content of X atoms} \leq A_X + 3\sigma_X$$

5. A method for producing a solid electrolyte, the method comprising:

(A) synthesizing a halide containing Li, M, and X,
(B) pulverizing the halide, and
(C) heat-treating the halide,

wherein the M is at least one selected from the group consisting of metalloids and metal elements other than Li,
X is at least one selected from the group consisting of F, Cl, Br, and I, and
the (A), the (B), and the (C) are performed in this order.

6. The production method according to claim 5,
wherein, in the (A), the halide is synthesized by causing raw materials to react by a mechanochemical milling method.

7. The production method according to claim 5,
wherein, in the (A), the halide is synthesized by heat-treating a mixture of raw materials.

8. The production method according to any one of claims 5 to 7,

wherein, in the (B), the halide is pulverized so as to obtain a pulverized material having an average particle diameter greater than or equal to 1 cm,
where the average particle diameter is determined by observing the pulverized material with an optical microscope in one field of view having a size that includes at least 100 halide particles, selecting 50 particles from the obtained microscope image in the descending order of the particle diameter, measuring the particle diameters of the selected particles, and determining the average value from the obtained measured values.

9. The production method according to any one of claims 5 to 8,

wherein, in the (C), the halide is placed in a container and heat-treated, and
a ratio of an opening area (unit: cm$^2$) of the container to a mass (unit: g) of the halide is greater than 0 and less than or equal to 0.5.

**10.** The production method according to any one of claims 5 to 9, further comprising:
(D) polishing the halide.

**11.** The production method according to any one of claims 5 to 10,

wherein a ratio P1 of a decreased mass D2 in the (A) to a decreased mass D1 of a final product solid electrolyte from a total mass of raw materials is greater than or equal to 90%,
where the decreased mass D2 in the (A) is a difference between the total mass of the raw materials before synthesis in the (A) and the mass of the halide synthesized in the (A), and
the ratio P1 is given by

$$(D2/D1) \times 100.$$

**12.** The production method according to any one of claims 5 to 11,

wherein a ratio P2 of a decreased mass D3 in the (C) to a decreased mass D1 of a final product solid electrolyte from a total mass of raw materials is less than or equal to 10%,
where the decreased mass D3 in the (C) is a difference between a mass of the halide after pulverizing in the (B) and before heat-treating in the (C) and a mass of the halide heat-treated in the (C), and
the ratio P2 is given by

$$(D3/D1) \times 100.$$

**13.** The production method according to any one of claims 5 to 12,
wherein M contains Y.

**14.** The production method according to any one of claims 5 to 13,
wherein X contains at least one selected from the group consisting of Cl and Br.

**15.** A battery comprising:

a positive electrode;
a negative electrode; and
an electrolyte layer disposed between the positive electrode and the negative electrode,
wherein, at least one selected from the group consisting of the positive electrode, the negative electrode, and the electrolyte layer contains the solid electrolyte according to any one of claims 1 to 4.

# FIG. 1

```
┌─────────────┐
│    START    │
└─────────────┘
       │
       ▼
┌──────────────────────────────┐
│       SYNTHESIS STEP         │───S100
└──────────────────────────────┘
       │
       ▼
┌──────────────────────────────┐
│      PULVERIZING STEP        │───S200
└──────────────────────────────┘
       │
       ▼
┌──────────────────────────────┐
│    HEAT TREATMENT STEP       │───S300
└──────────────────────────────┘
       │
       ▼
┌─────────────┐
│     END     │
└─────────────┘
```

# FIG. 2

```
        ┌──────────┐
        │  START   │
        └────┬─────┘
             ▼
   ┌────────────────────┐
   │   SYNTHESIS STEP   │ ── S100
   └─────────┬──────────┘
             ▼
   ┌────────────────────┐
   │  PULVERIZING STEP  │ ── S200
   └─────────┬──────────┘
             ▼
   ┌────────────────────┐
   │ HEAT TREATMENT STEP│ ── S300
   └─────────┬──────────┘
             ▼
   ┌────────────────────────┐
   │ SECOND PULVERIZING STEP│ ── S400
   └──────────┬─────────────┘
              ▼
   ┌──────────────────────────┐
   │ SECOND HEAT TREATMENT STEP│ ── S500
   └──────────┬───────────────┘
              ▼
        ┌──────────┐
        │   END    │
        └──────────┘
```

# FIG. 3

```
        ┌─────────────┐
        │    START    │
        └─────────────┘
               │
               ▼
┌──────────────────────────────┐
│        SYNTHESIS STEP        │ ～S100
└──────────────────────────────┘
               │
               ▼
┌──────────────────────────────┐
│       PULVERIZING STEP       │ ～S200
└──────────────────────────────┘
               │
               ▼
┌──────────────────────────────┐
│     HEAT TREATMENT STEP      │ ～S300
└──────────────────────────────┘
               │
               ▼
┌──────────────────────────────┐
│        POLISHING STEP        │ ～S600
└──────────────────────────────┘
               │
               ▼
        ┌─────────────┐
        │     END     │
        └─────────────┘
```

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020136951 A